# EUROPÄISCHE PATENTSCHRIFT

(11) **EP 0 356 908 B1**
(45) Veröffentlichungstag und Bekanntmachung des Hinweises auf die Patenterteilung: **05.01.1994**
(21) Anmeldenummer: 89115600.2
(22) Anmeldetag: 24.08.1989
(51) Int. Cl.: F42C 21/00, G06F 11/00

(54) **Verfahren und Vorrichtung zur Funktionsüberprüfung eines Waffensystems**
Method and device for functional control of a weapon system
Méthode et dispositif de contrôle de fonctionnement d'un système d'armes

(30) Priorität: 27.08.1988 DE 3829136
(43) Veröffentlichungstag der Anmeldung: 07.03.1990
(73) Patentinhaber: HONEYWELL AG, 63067 Offenbach (DE)
(72) Erfinder: Merz, Manfred, Dipl.-Ing., D-6052 Mühlheim (DE); Riewe, Franz-Jürgen, Ing., D-6458 Rodenbach (DE)
(74) Vertreter: Herzbach, Dieter, Dipl.-Ing.

(56) Entgegenhaltungen:
- EP-A- 0 208 480
- WO-A-84/04157
- US-A- 4 375 192
- US-A- 4 674 047

## Beschreibung

Die vorliegende Erfindung bezieht sich auf ein Verfahren zur Funktionsüberprüfung eines Waffensystems nach dem Gattungsbegriff des Patentanspruches 1 sowie auf eine Vorrichtung zur Durchführung dieses Verfahrens nach dem Gattungsbegriff des Patentanspruchs 2. Ein solches Waffensystem kann insbesondere durch eine Mine mit einem elektronischen Zünder vorgegeben sein.

In diesem Zusammenhang ist es bekannt, bei einer Mine den Gesamtfunktionsablauf aufgrund von gemessenen Sensorsignalen durch einen Mikroprozessor zu steuern. Hierbei werden von den Sensoren gelieferte analoge Signale über Multiplexer und Analog/Digital-Wandler dem Mikroprozessor in digitaler Form zugeführt. Der Mikroprozessor verarbeitet die digitalen Sensorsignale, bewertet diese und extrahiert Merkmale, wobei dies gemäß bestimmter Algorithmen beim Durchlauf von Programmschleifen geschieht. Bei bestimmten Merkmalskombinationen wird die Zündung einer Explosivladung ausgelöst.

Das Problem bei der Entwicklung der Zündalgorithmen besteht darin, daß in Abhängigkeit von unterschiedlichen Fahrzeugtypen, unterschiedlichen Geschwindigkeiten, der Fahrtrichtung und eventueller Störmaßnahmen jeweils unterschiedliche Fahrzeugsignaturen durch die Sensoren des Zünders ermittelt werden. Die Software der Zündalgorithmen muß hierbei so aufgebaut sein, daß sie bei möglichst vielen Fahrzeugtypen zur Zündung führt und möglichst wenige Fehlauslösungen außerhalb des Fahrzeuges oder auch bei Störmaßnahmen erzeugt. Zur Erfüllung dieser Anforderungen sind normalerweise umfangreiche Test- und Erprobungsmaßnahmen erforderlich. Insbesondere ist es für die Entwicklung der Zündalgorithmen und das Testen der Software wichtig zu wissen, welche Programmzweige beim Anlegen bestimmter externer Anregungssignale, wie beispielsweise magnetischer Signaturen und Störmaßnahmen durchlaufen werden.

Es ist die Aufgabe der vorliegenden Erfindung, ein Verfahren zur Funktionsüberprüfung eines Waffensystems anzugeben, das in einfacher Weise die Feststellung und Analyse eines Fehlers gestattet. Die Lösung dieser Aufgabe gelingt gemäß den Merkmalen des Patentanspruches 1. Eine Vorrichtung zur Durchführung dieses Verfahrens und weitere Ausgestaltungen der erfindungsgemäßen Vorrichtung sind dem Patentanspruch 2 und den Unteransprüchen entnehmbar.

Die vorliegende Erfindung findet vorzugsweise Anwendung bei der Funktionsüberprüfung von elektronischen Minenzündern, wobei Statusbytes, die beim Durchlaufen von entsprechenden Programmschleifen gesetzt werden, in einem Schreib/Lesespeicher abgespeichert und mittels eines Testgerätes an einem Anschluß des Mikroprozessors ausgelesen werden können.

Anhand eines in den Figuren der beiliegenden Zeichnung dargestellten Ausführungsbeispieles sei im folgenden die Erfindung näher beschrieben. Es zeigen:
- Fig. 1: eine Mine in einem Blockschaltbild:
- Fig. 2: ein Flußdiagramm zur Veranschaulichung des in der Mine ablaufenden Programmes; und
- Fig. 3: ein Blockschaltbild einer Test- bzw. Simulationsvorrichtung.

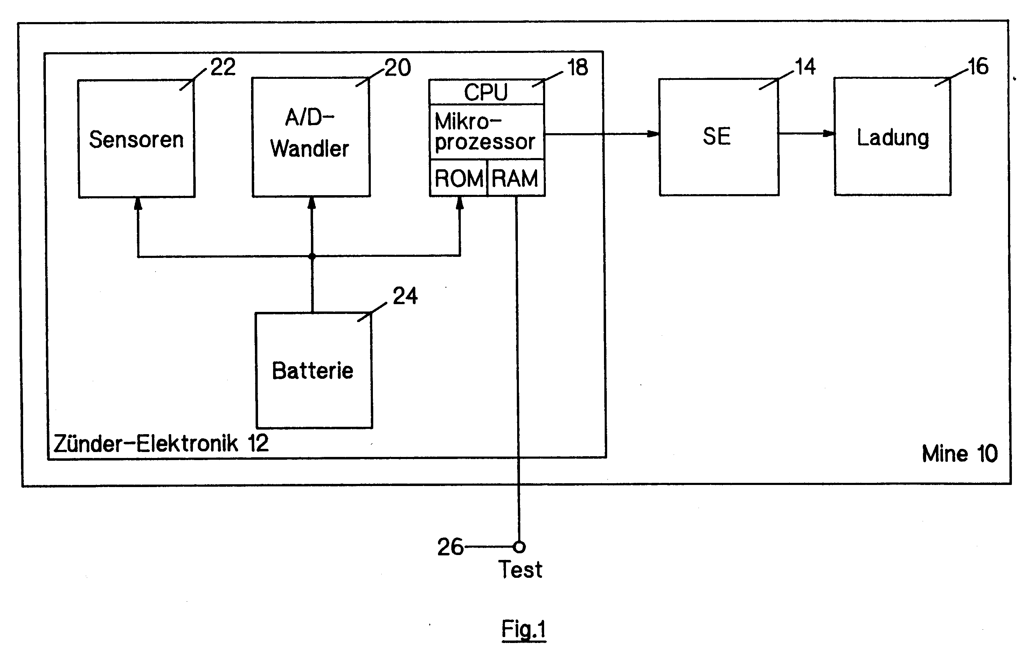

Gemäß Fig. 1 umfaßt eine Mine 10 eine Zünderelektronik 12 sowie eine Sicherungseinrichtung 14 und eine Explosivladung 16. Die Zünderelektronik 12 enthält als Kernstück einen Mikroprozessor 18, dem über Analog/Digital-Wandler 20 Signale von einem oder mehreren Sensoren 22 zugeführt werden. Eine Batterie 24 speist die gesamte Zünderelektronik, wobei der Mikroprozessor 18 in bekannter Weise eine Zentraleinheit CPU, einen Schreib/Lesespeicher RAM und einen Programm-Festwertspeicher ROM auf einem Chip umfaßt. Der Inhalt des Schreib/Lesespeichers RAM kann an einem Testanschluß 26 bitweise seriell ausgelesen und angezeigt bzw. protokolliert werden, wobei die ausgelesene Information aus Statusbytes besteht, die durch ihren wert anzeigen, welche Programmschleife zwischen Beginn und Ende der Wirkzeit des Zünders durchlaufen wurde.

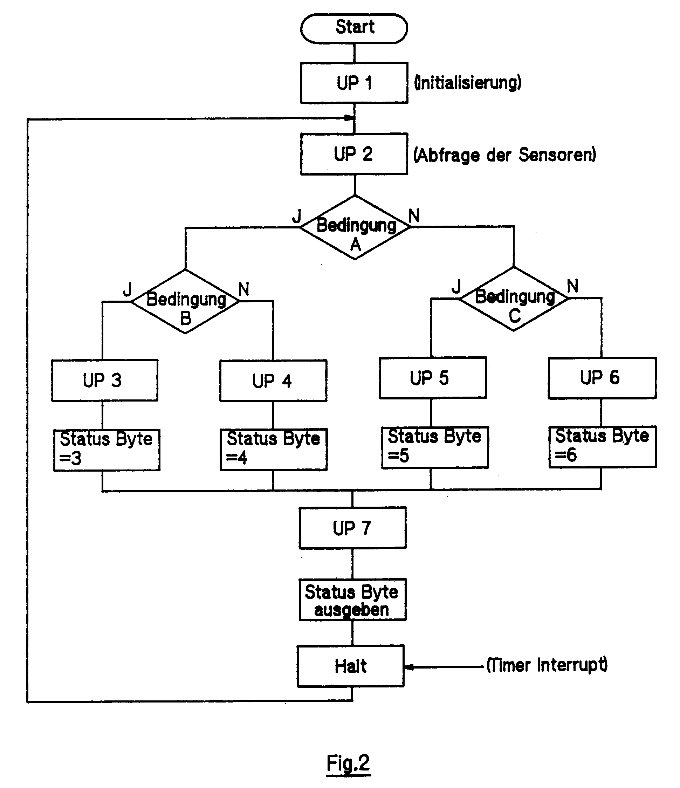

Fig. 2 zeigt in vereinfachter Darstellung ein Flußdiagramm für das in einem Minenzünder ablaufende Programm. Nach dem Start erfolgt in einem ersten Programmteil UP1 die Initialisierung des Zünders (Mikroprozessors) und danach werden in einem zweiten Programmteil UP2 die Sensoren des Minenzünders abgefragt. Danach wird geprüft, ob die Bedingung A erfüllt ist oder nicht. Diese Bedingung A kann beispielsweise durch einen Schwellwert der Sensorsignale vorgegeben sein. Ist diese Bedingung A erfüllt, so kann beispielsweise geprüft werden, ob eine zweite Bedingung B erfüllt ist. Ist diese ebenfalls erfüllt, so wird ein dritter Programmteil UP3 durchlaufen und ein entsprechendes Statusbyte, z.B. mit dem Wert "3" gesetzt, um auf diese durchlaufene Programmschleife hinzuweisen.

Ist die Bedingung B nicht erfüllt, so wird ein vierter Programmteil UP4 durchlaufen und ein entsprechendes Statusbyte mit dem Wert "4" gesetzt.

War bereits die Bedingung A nicht erfüllt, so kann eine Prüfung dahin gehend erfolgen, ob eine dritte Bedingung C erfüllt ist. Ist diese Bedingung C erfüllt, so wird ein fünfter Programmteil UP5 durchlaufen und ein entsprechendes Statusbyte mit dem Wert "5" gesetzt.

Wird die dritte Bedingung C nicht erfüllt, so wird ein sechster Programmteil UP6 durchlaufen und ein entsprechendes Statusbyte mit dem Wert "6" gesetzt.

Nach dem Durchlauf einer der Programmteile UP3 bis UP6 wird ein siebter Programmteil UP7 durchlaufen und entsprechend dem durchlaufenen Programmteil eines der Statusbytes mit dem Wert 3 bis 6 ausgegeben. Danach hält das Programm an (HALT-ZUSTAND) und wird erst durch die Zeitgeber-Unterbrechung (Timer Interrupt) neu gestartet. Die Zeitgeber-Unterbrechung ist ein zyklisches Signal, das von dem Zeitgeber des Mikroprozessors erzeugt wird und dessen Frequenz durch die Software vorgegeben ist. Hierdurch wird erreicht, daß die Abfrage der Sensoren in festen zeitlichen Abständen (z.B. 10 ms) erfolgt.

Je nach der Größe der Sensorsignale aber auch in Abhängigkeit von anderen Signalen, wie beispielsweise der erreichten Spannung einer aktivierbaren Batterie usw. wird eine Programmschleife durchlaufen, die beispielsweise zur Zündung der Mine führt oder auch nicht. Da beim Durchlauf der jeweiligen Programmschleife jeweils ein Statusbyte gesetzt wird, in den RAM-Speicher des Mikroprozessors eingeschrieben wird und dieses Statusbyte jeweils an dem Testanschluß als serielles Signal ausgelesen wird, bevor der Mikroprozessor in den Halt-Zustand geht, ist es möglich, die Funktion des Zünders genau zu analysieren.

Die Auswertung kann hierbei auf verschiedene Art und Weise erfolgen. Beispielsweise kann das seriell übertragene Statusbyte einer Testbox zugeführt und auf einer Ziffernanzeige als Zahl angezeigt werden. Dies hat jedoch den Nachteil, daß bei sich schnell ändernden Programmdurchläufen der Wechsel des Statusbytes auf der Ziffernanzeige visuell nicht mehr wahrgenommen werden kann. Besser ist in dieser Hinsicht die Verwendung eines Analysers, bei dem das seriell ausgegebene Statusbyte in ein paralleles Wort umgesetzt und sequentiell gespeichert wird. Je nach Speicherkapazität des Analysers können zeitliche Verläufe. z.B. die Überfahrt eines Fahrzeuges gespeichert werden. Auch können die gespeicherten Daten auf einem Bildschirm oder auf einem Drucker ausgegeben werden.

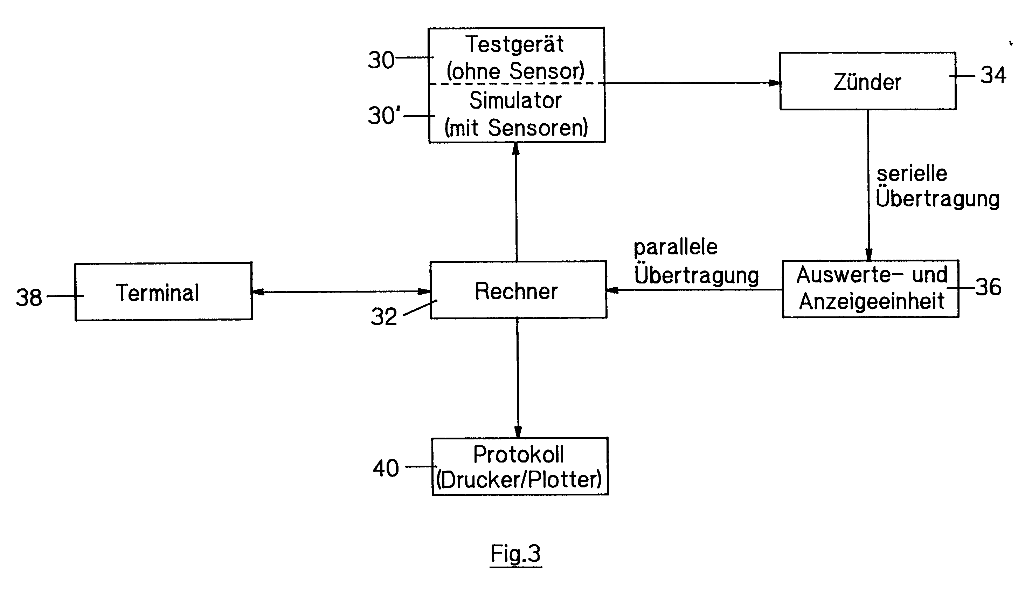

Besonders vorteilhaft ist eine Auswertung der Zünderfunktion mit einem automatischen Prüfgerät, wie dies in Fig. 3 dargestellt ist. Diese Auswertung eignet sich insbesondere für eine Fertigungsendprüfung beim Hersteller der Zünderelektronik oder auch für eine Funktionsprüfung der vollständigen Mine nach ihrer Fertigung beim militärischen Verwender. In diesem Stadium kann die Zünderelektronik z.B. vergossen sein und so im Zündergehäuse eingebaut sein, daß außer dem Testanschluß kein anderer Meßpunkt mehr zugänglich ist.

Gemäß Fig. 3 erzeugt ein Testgerät 30 gesteuert von einem Rechner 32 direkt Testsignale für einen Zünder 34. Ebenso kann ein Simulator 30′ über zwischengeschaltete Sensoren diese Testsignale für den Zünder 34 erzeugen. Der Zünder 34 gibt an seinem Testanschluß je nach durchlaufenem Unterprogramm ein Statusbyte in serieller Form aus, das einer Auswerte- und Anzeigeeinheit 36 zugeführt und durch diese serien/parallel gewandelt wird. Diese Statusbytes werden dem Rechner 32 zugeführt, der beispielsweise gemäß einem über ein Terminal 38 eingegebenen Testprogramm auf das Testgerät bzw. den Simulator 30 bzw. 30′ einwirkt, um die Test- bzw. Simulatorsignale entsprechend zu verändern. Zugleich können mittels eines Druckers oder Plotters 40 die Testergebnisse protokolliert werden.

Wenn als Simulator ein Magnetfeldsimulator zur Anwendung gelangt, so kann man mit Hilfe des Rechners Magnetfelder erzeugen, die in ihrem zeitlichen Verlauf der Signatur eines Fahrzeugs entsprechen. Befindet sich der Minenzünder in dem Magnetfeld des Simulators, so kann bei entsprechend erzeugter magnetischer Signatur das serielle Statusbyte des Zünders jeweils abgefragt werden und mit vorgegebenen Sollwerten verglichen werden. Auf diese weise kann man nachweisen, daß der Mikroprozessor der Zünderelektronik beim Anliegen bestimmter Signaturen bestimmte Algorithmen abarbeitet und einen Zündbefehl erzeugt. Jeder Mine läßt sich dann ein entsprechendes Testprotokoll zuordnen.

## Patentansprüche

1. Verfahren zur Funktionsüberprüfung eines Waffensystems mit durch Sensorsignalen bestimmten Funktionsabläufen, insbesondere eines elektronischen Zünders, wobei ein Rechner, insbesondere ein Mikroprozessor, die Sensorsignale verarbeitet und Funktionen gemäß vorgegebenen Programmschleifen auslöst, **dadurch gekennzeichnet,** daß beim Durchlauf einer Programmschleife ein dieser Programmschleife zugeordnetes Statusbyte gesetzt, in einem Speicher abgespeichert und zyklisch bitweise seriell an eine Auswerte- und Anzeige einheit (36) übertragen wird.

2. Vorrichtung zur Funktionsüberprüfung eines Waffensystems mit durch Sensorsignalen bestimmten Funktionsabläufen, insbesondere eines elektronischen Zünders (12), wobei ein Rechner, insbesondere ein Mikroprozessor (18), die Sensorsignale verarbeitet und Funktionen gemäß vorgegebenen Programmschleifen auslöst, **gekennzeichnet durch** einen dem Mikroprozessor (18) zugeordneten Schreib/Lesespeicher (RAM), in den ein jeweils einer durchlaufenen Programmschleife zugeordnetes und zyklisch bitweise seriell übertragbares Statusbyte eingeschrieben wird.

3. Vorrichtung nach Anspruch 2, **dadurch gekennzeichnet,** daß der Inhalt des Schreib/Lesespeichers (RAM) an einem Testanschluß (26) zugänglich ist.

4. Vorrichtung nach Anspruch 3, **dadurch gekennzeichnet,** daß mit dem Testanschluß (26) eine Auswerte- und Anzeigeeinheit (36) verbunden ist.

5. Vorrichtung nach Anspruch 4, **dadurch gekennzeichnet,** daß die Auswerte- und Anzeigeeinheit (36) an einen Rechner (32) angeschlossen ist, der seinerseits gemäß einem vorgegebenen Programm auf ein Testgerät bzw. Simulator (30, 30′) für das Waffensystem (34) einwirkt.

## Claims

1. A method for the operational test of a weapon system having operational sequences determined by sensor signals, in particular for an electronic fuze, whereat a computer, in particular a microprocessor, is processing the sensor signals and initializes functions according to predetermined program loops, **characterized in that** in running through a program loop a status byte, which is related to said program loop, is set and stored in a memory and is cyclically transferred in a bit-serial manner to an evaluation and indication unit.

2. A device for the operational test of a weapon system having operational sequences determined by sensor signals, in particular for an electronic fuze (12), whereat a computer, in particular a microprocessor (18) is processing the sensor signals and initializes functions according to predetermined program loops, **characterized by** a write/read memory (RAM) assigned to said microprocessor (18), into which memory a status byte is written-in, which status byte is related to each program loop passed through and is cyclically transferred in a bit-serial manner.

3. A device according to claim 2, **characterized in that** the contents of the write/read memory (RAM) is accessible at a test terminal (26).

4. A device according to claim 3, **characterized in that** an evaluation and indication unit (36) is connected to said test terminal (26).

5. A device according to claim 4, **characterized in that** the evaluation and indication unit (36) is connected to a computer (32), which on its side acts upon a test device or simulator (30, 30'), respectively, for the weapon system (34) according to a predetermined program.

## Revendications

1. Méthode de contrôle du fonctionnement d'un système d'armes avec des déroulements de fonction déterminés par des signaux des capteurs, en particulier d'un allumeur électronique, un calculateur, en particulier un microprocesseur, traitant les signaux de capteurs et déclenchant des fonctions selon des boucles de programme prédéterminés, caractérisé en ce que, lors du déroulement d'une boucle de programme, un octet d'état, associé à cette boucle de programme, est placé, stocké dans une mémoire et transmis cycliquement, par bit, en mode série, à une unité d'exploitation et d'affichage (36).

2. Dispositif de contrôle de fonctionnement d'un système d'armes avec des déroulements de fonction déterminés par des signaux de capteurs, en particulier un allumeur électronique (12), un calculateur, en particulier un microprocesseur (18), traitant les signaux de capteurs et déclenchant des fonctions selon des boucles de programme prédéterminées, caractérisé par une mémoire d'écriture/lecture (RAM) associée au microprocesseur (18), dans laquelle est enregistré un octet d'état, associé chaque fois à une boucle de programme en cours d'exécution et transmis cycliquement par bit en mode série.

3. Dispositif selon la revendication 2, caractérisé en ce que le contenu de la mémoire d'écriture/lecture (RAM) est accessible à un raccordement d'essai (26).

4. Dispositif selon la revendication 3, caractérisé en ce qu'une unité d'exploitation et d'affichage (36) est reliée au raccordement d'essai (26).

5. Dispositif selon la revendication 4, caractérisé en ce que l'unité d'exploitation et d'affichage (36) est raccordée à un ordinateur (32) agissant de son côté selon un programme prédéterminé sur un appareil d'essais, respectivement un simulateur (30, 30') pour le système d'armes (34).
